# EUROPEAN PATENT SPECIFICATION

(11) **EP 3 914 417 B1**
(45) Date of publication and mention of the grant of the patent: **04.03.2026**
(21) Application number: 19769667.7
(22) Date of filing: 30.08.2019
(51) Int. Cl.: B23K 26/082, B23K 26/70, B23K 26/03

(54) **A GALVANOMETRIC LASER SYSTEM WITH A CALIBRATION TEST PIECE**
GALVANOMETRISCHES LASERSYSTEM MIT EINEM KALIBRIERTESTTEIL
SYSTÈME LASER GALVANOMÉTRIQUE COMPRENANT UNE PIÈCE D'ESSAI D'ÉTALONNAGE

(30) Priority: 23.01.2019 US 201962796011 P; 14.03.2019 US 201962818624 P
(43) Date of publication of application: 01.12.2021
(73) Proprietor: nLIGHT, Inc., Vancouver, WA 98665 (US)
(72) Inventor: BROWN, Aaron, Vancouver, WA 98665 (US); SMALL, Jay, Vancouver, WA 98665 (US); MARTINSEN, Robert J., Vancouver, WA 98665 (US)
(74) Representative: Dehns
(86) International application number: PCT/US2019/049215
(87) International publication number: WO 2020/153995

(56) References cited:
- WO-A1-2009/054811
- US-A- 5 832 415
- US-A1- 2004 152 233
- US-A1- 2005 067 394
- US-A1- 2005 205 778
- US-A1- 2018 281 067

## Description

### Technical Field

The present invention relates to two-dimensional and three-dimensional galvanometric scanning systems, and more particularly to a galvanometric laser system according to the preamble of claim 1 (see for example US 2005/205778 A1).

### Background

Fiber lasers are widely used in industrial processes (e.g., cutting, welding, cladding, heat treatment, additive manufacturing, etc.) In some fiber lasers, the optical gain medium includes one or more active optical fibers with cores doped with rare-earth element(s). The rare-earth element(s) may be optically excited ("pumped") with light from one or more semiconductor laser sources.

Fiber laser systems may be used in laser processing machines. In one type of laser processing machine, both the laser source and the work piece are stationary and galvo (galvanometric) mirrors move the laser beam across a surface of the work piece.

In a 2D galvo system, an X-Y scan head module including two mirrors each rotatable by a galvanometric motor is located along a laser beam path between a laser device and a work piece to be laser processed, e.g., marked, cut, engraved, melted (for additive manufacturing) or the like, by the laser beam. The first galvanometric motor may operate to rotate its mirror to reposition the laser beam along the work piece with respect to a first axis (the X direction). The second galvanometric motor may operate to rotate its mirror to reposition the laser beam along the work piece with respect to a second orthogonal axis (the Y direction).

A 3D galvo system is similar, except that a dynamic focus module may be used in addition to the X-Y scan head module (say, along the light path between the X-Y scan head module and the laser device). In the dynamic focus module, one or more lenses move relative to the laser device to move a point of focus of the laser beam along a third axis (the Z direction) that is orthogonal to the first and second axes, which enables three dimensional laser processing (e.g., laser cutting) of the work piece.

In both 2D and 3D GSSs, precision movement of the mirrors is needed to ensure that the laser processes the work piece as intended. A validation may be performed at any time to check the "aim" of the laser system (whether the laser system marks a selected location on the work piece in response to a command to mark that selected location). Whereas a miscalibration of the mirrors may be exhibited by a laser mark that is "off target," a miscalibration of the dynamic focus module may be exhibited by poor mark quality. This is because the focus point that dynamically changes as the galvo points about the X-Y plane may be above or below and intended focus point, meaning the laser is not correctly focuses on the location to be processed (which may result in poor processing performance, and hence poor mark quality).

Some calibration may require the use of the GSS to mark a pattern on a work piece located on a support platen of the GSS. The marks on the work piece may be measured using an external imaging system (e.g., a separate CMM (coordinate measuring machine)) for comparison to the idealized location for the marks (and evaluation of mark quality in the case of calibrating a dynamic focus module).

### Summary

According to a first aspect of the present invention, there is provided a galvanometric laser system as claimed in claim 1.

Preferred embodiments of the first aspect of the present invention are defined in the dependent claims.

### Brief Drawings Description

The accompanying drawings, wherein like reference numerals represent like elements, are incorporated in and constitute a part of this specification and, together with the description, explain the advantages and principles of the presently disclosed technology.
FIG. 1 illustrates a system including a two axis galvanometric laser and a calibration test plate, according to various embodiments.
FIG. 2 illustrates a system including a three axis galvanometric laser and the calibration test plate of FIG. 1, according to various embodiments.
FIG. 3A illustrates a perspective view of a back-lit calibration test plate, according to various embodiments.
FIG. 3B illustrates a bottom view of a back-lit calibration test plate similar to the back-lit calibration test plate of FIG. 3A, according to various embodiments.
FIG. 4 illustrates a perspective view of an edge-lit calibration test plate, according to various embodiments.
FIG. 5 illustrates a perspective view of calibration test plate with a reflective surface, according to various embodiments.
FIG. 6 illustrates a process of generating assessment data using an in-machine imaging system, according to various embodiments.
FIG. 7 illustrates a process of camera-aided evaluation of assessment data generating by imaging a calibration fiducial on a calibration test plate through an X-Y scan head module, according to various embodiments.

### Detailed Description

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items. The systems, apparatus, and methods described herein should not be construed as limiting in any way. Instead, the present disclosure is directed toward all novel and non-obvious features and aspects of the various disclosed embodiments, alone and in various combinations and sub-combinations with one another. The term "or" refers to "and/or," not "exclusive or" (unless specifically indicated).

The disclosed systems, methods, and apparatus are not limited to any specific aspect or feature or combinations thereof, nor do the disclosed systems, methods, and apparatus require that any one or more specific advantages be present or problems be solved. Any theories of operation are to facilitate explanation, but the disclosed systems, methods, and apparatus are not limited to such theories of operation. Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed systems, methods, and apparatus can be used in conjunction with other systems, methods, and apparatus.

Additionally, the description sometimes uses terms like "produce" and "provide" to describe the disclosed methods. These terms are high- level abstractions of the actual operations that are performed. The actual operations that correspond to these terms will vary depending on the particular implementation and are readily discernible by one of ordinary skill in the art. In some examples, values, procedures, or apparatus' are referred to as "lowest", "best", "minimum," or the like. It will be appreciated that such descriptions are intended to indicate that a selection among many used functional alternatives can be made, and such selections need not be better, smaller, or otherwise preferable to other selections.

Examples are described with reference to directions indicated as "above," "below," "upper," "lower," and the like. These terms are used for convenient description, but do not imply any particular spatial orientation.

Instead of using an external CMM or other external imaging system to evaluate a marking on a work piece, an "in-machine" imaging system may be used to view a pattern projected onto a working plane as described in published U.S. Patent Application 2018/281067 A1. By "in-machine," we mean an imaging system that views the pattern *through* optical components of the galvanometric laser (e.g., using the mirrors or other optical components of the X-Y scan head module and/or of a dynamic focus module). In these systems, imagery from the in-machine imaging system may be used to measure the difference in location between the projected pattern and the actual beam axis of the galvo. The '067 publication describes embodiments that include an optical fiducial pattern generator to project a transient optical fiducial on a laser processing target. This allows for calibraiton while a work piece is on the support platen (e.g., while powder material used in additive manufacturing is located on the support platen) because the transient optical fiducial may be projected onto the powder material. Some embodiments described herein may also may use an in-machine imaging system, but may use a non-transient calibration fiducial provided on a calibration test piece, instead of (or in addition to) use of the transient optical fiducial.

In one embodiment, a calibration test plate is placed onto the support platen to calibrate the GSS using the in-machine imaging system prior to placing a work piece on the support platen. In contrast to some CMM dependent calibration solutions that require evaluation of a mark on a work piece (paper, or flat metal plate) using an external CMM, the calibration test plate may not be marked at all (in fact, it may be possible and/or practical to perform calibration without even powering the *laser source,* let alone marking a work piece with a laser beam).

The calibration test piece may be any physical item having a surface (e.g., a planar surface) with one or more calibration fiducials usable by the in-machine imaging system to generate calibration data for calibrating the X-Y scan head module (these one or more calibration fiducials may span the span the field of the scanner area). The location of the features may be understood via pre-characterization. The imagery from the in-machine imaging system may be used to measure the difference in location between at least one of the calibration fiducials and the actual beam axis of the scanner. Once the X-Y difference is understood for multiple locations on the calibration test plate, calibration operations may be run without the need for an external CMM.

In one configuration according to the first aspect of the present invention, the calibration test plate may include an internal light source to emit light to provide high-contrast, sharp-edged features in the imagery from the in-machine imaging system. Characteristics of the light source may be based on optical characteristics of optical components (e.g., mirrors, lens, a selective optic, etc.) along the light path between the calibration test plate and the in-machine imaging system (e.g., based on characteristics of optical components of the X-Y scan head module and/or the dynamic focus module). In other embodiments, the calibration test plate may not have an internal light source, but the surface on which the one or more calibration fiducials are located may have an optical feature to reflect light having characteristics based on characteristics of optical components along the light path between the calibration test plate and the in-machine imaging system, which may also provide high-contrast, sharp-edged features in the imagery from the in-machine imaging system.

The calibration test plate may include a locating feature to ensure repeatable location within the machine (e.g., a repeatable location on the support platen). The calibration test plate may be made from a material selected to be mechanically and thermally stable. In one embodiment, the calibration test plate may comprise glass with lithographed features, although many other options may be possible and practical. In another embodiment, the calibration test plate may comprise machined or etched metal or ceramic. In some embodiments, the calibration test plate may have plural layers (e.g., a glass layer with lithographed features, and a metal or some other support layer to provide rigidity to the glass layer or other top layer).

Some embodiments may utilize a pre-characterized calibration test plate and projection. The calibration test plate may be used prior to placing a work piece on the support platen. If the calibration of the X-Y scan head module is calibrated using the calibration test plate, then a work piece or other laser processing target may be placed on the support platen for laser processing thereof. Calibration may be performed one or more additional times, during laser processing, using an optical fiducial pattern generator, as described in the '067 publication.

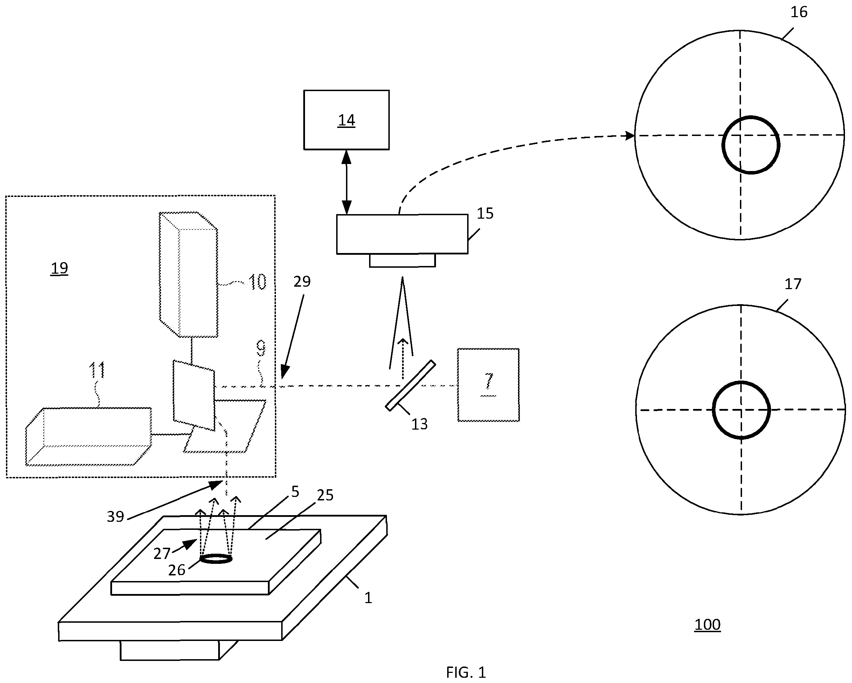

FIG. 1 illustrates a system 100 including a two axis galvanometric laser and a calibration test plate 25, according to various embodiments. The two axis galvanometric laser includes a laser device 7 to generate a laser beam and an X-Y scan module 19 to move the laser beam relative to a work surface. The X-Y scan module 19 may include an X galvo motor 10 to drive rotation of a mirror and a Y galvo motor 11 to drive rotation of a mirror. The laser beam is not shown, but dashed line 9 shows a path that the laser beam travels through the system 100 (the X-Y scan module includes a laser ingress 29 to receive the laser beam and a laser egress 39 to output the laser beam to the work surface).

The calibration test plate 25 includes a first side to arranged to be placed on a support platen 1 of the system 100 during calibration (calibration may be performed prior to placing a work piece (not shown) on the support platen 1 for processing by the laser beam). In some embodiments, the first side (or some other portion of the calibration test plate 25) may include a guide for locating the calibration test plate 25 at the specific location on the support platen 1. A second opposite side of the calibration test plate 25 includes at least one calibration fiducial 26 usable by a camera 15 to generate calibration data for calibrating the X-Y scan head module 19. In some embodiments, the calibration fiducial 26 may have the same geometry as any of the patterns described in U.S. provisional application serial no. 62/818,624. While the '624 provisional describes *marking* the patterns on a work piece using a laser beam (the patterns described in the '624 provisional are *laser marking artifacts*) - different than *imaging* the calibration test plate 25 having calibration fiducials as described herein - there may be similar advantages to using the same geometry for the calibration fiducial 26. For instance, in some embodiments, a calibration fiducial 26 may be a polygon or an ellipse (e.g., a geopmetrically perfect circle or some other ellipse) - rather than intersecting line patterns such as a X pattern or a + pattern, although this is not required (in some embodiments, it may be possible or practical to use a pattern of intersecting lines for the calibration fiducial 26).

The calibration test plate 25 may include an optical feature to direct light 27 into the laser egress 39. Again, this may be at a time when the laser device 7 is not generating a laser beam (the calibration test plate 25 may be placed on the support platen 1 prior to placement of a work piece on the support platen 1 for laser processing of the work piece). The light 27 may have selected characteristics (e.g., a selected wavelength) that makes it possible for the light 27 to reach camera 15. In one embodiment, the laser beam may have a wavelength of 975nm and the light 27 may also have a wavelength of 975nm.

Some of the optical components along the path 9 are shown, others are not for the sake of brevity. For instance, the system may include a laser scan optic (not shown), which may be the first optical component that receives the light 27. U.S. Patent Application 2018/0281067 describes laser scan optics, and the system 100 may employ any laser scan optics described therein according to various embodiments. The laser scan optic may have one or more characteristics based on its function with respect to the laser beam (it may pass light only in a selected wavelength range). The selected characteristics of the light 27 may be based on the characteristic(s) of the laser scan optic, so that the laser can pass through the laser scan optic in the reverse direction through the rest of the X-Y scan module 19 to reach selective optic 13.

Selective optic 13 may be optically transmissive to the laser beam, but optically non-transmissive (e.g., reflective) to the light 27. The selected characteristics of the light 27 may also be based on characteristic(s) of the selective optic 13 so that the light 27 reaches the camera 15. In one example, the light 27 may be the same wavelength as the laser beam, but polarized differently than the laser beam so that it reflects from the selective optic 13 rather than passing through it as does the laser beam. U.S. Patent Application 2018/0281067 describes a selective optic, and the system 100 may employ any laser scan optics described therein according to various embodiments. Accordingly, the light 27 reaches the camera 15, which may sense the light 27 and generate an image 16 of the calibration test plate 25.

The image 16 is assessment data that, when displayed on an electronic display, may be evaluated by visual inspection by a person. For instance, an operator may measure a difference between a center of a geometric feature appearing in the assessment data (e.g., the representation of the calibration fiducial) and a reference (e.g., a center of the image 16, shown in the illustration as an intersection of the dash lines). The operator may determine whether the difference is greater than a preset threshold - if there is no difference, or the difference is minimal, the operator may validate the calibration of the X-Y scan head module. The validation may be recorded in a computer storage, such as a database, and/or recorded on some other medium (such as by initiating a label on the galvanometric laser, or some other means of recordation). For instance, by comparing image 16 to an idealized image 17 (an image generated by a perfectly calibrated X-Y scan head module), it is apparent than the image 16 shows miscalibration in both axes because the ellipse is offset horizontally and vertically.

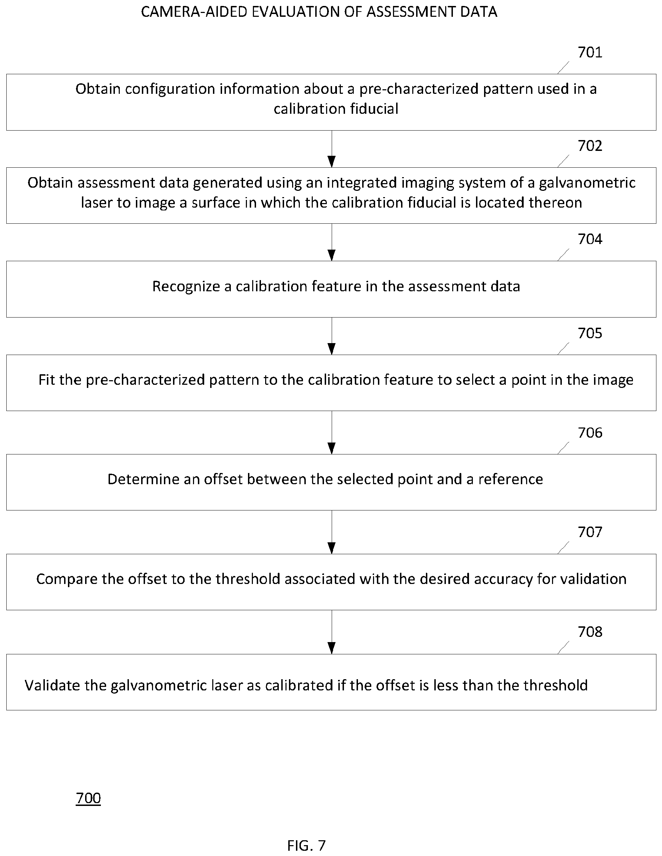

In some embodiments camera-aided evaluation embodiment, the system 100 may also include one or more computing devices 14 each including at least one processor configured to execute instructions stored in a memory. The computing device(s) 14 may be in communication with any component of the system 100 to perform any calibration validation operations described herein. In embodiments including the imaging system, at least one of the computing devices may be a computing device of the imaging system, in communication with the camera 15 and including a processor programmed to perform any imaging system process described herein, including process 700 of FIG. 7, which will be described later in greater detail.

Referring again to FIG. 1, the light 27 may be reflected and/or emitted from the calibration test plate 25 based on the optical feature of the calibration test plate 25. In one example, the surface having the calibration fiducial is arranged to receive light from an ambient source, and reflect some of the ambient light (e.g., to direct light 27 into the laser egress). The reflectivity may be variable - with different reflectivity for the calibration fiducial 26 and the rest of the surface, which may provide high contrast in the image 16. In other examples, the calibration test plate 25 may include an on-board light source (e.g., an *active* calibration test plate 25) to generate the light 27. In another configuration according to the first aspect of the present invention, the calibration test plate 25 may include one or more optically transmissive edges so that light generated by a light source external to the calibration test plate 25 may enter the calibration test plate 25 allowing the calibration test plate 25 to emit light 27 from the surface having the calibration fiducial 26.

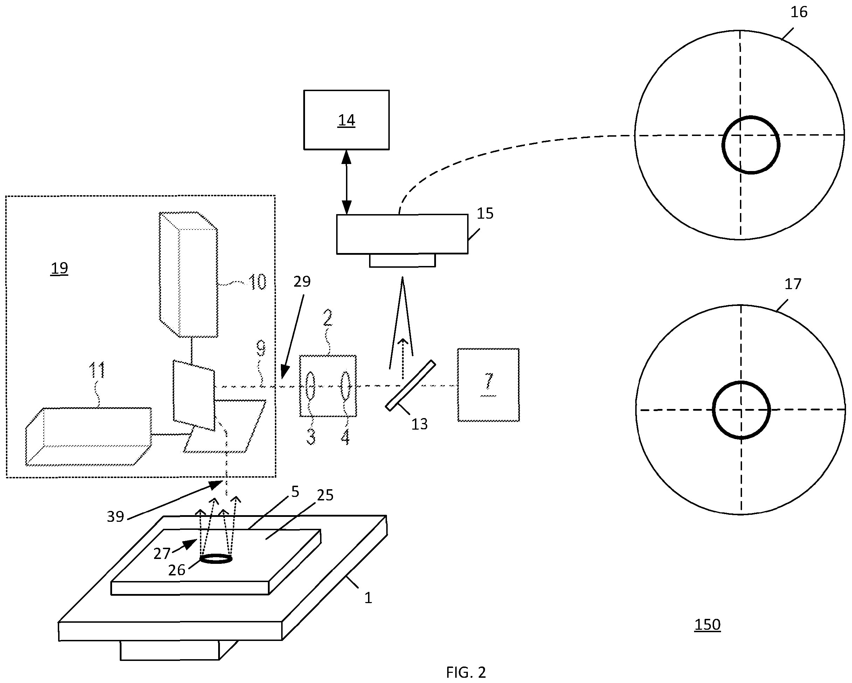

FIG. 2 illustrates a system 150 including a three axis galvanometric laser and the calibration test plate of FIG. 1, according to various embodiments. The system 150 may include all of the components of FIG. 1, and additionally may include a dynamic focus module 2 to synchronize movement of at least one lens relative to the laser device 7 with positioning of the laser beam by the X-Y scan head module 19. The dynamic focus module 2 may include lens 3 and 4, and the dynamic focus module 2 may control movement of these lens 3 and 4 relative to each other and/or the laser device 7 to change a point of focus of the laser beam. The light 27 may pass through the dynamic focus module 2 to reach the selective optic 13. The selected wavelength of the light 27 may be selected based on characteristics of the lens 3 and 4.

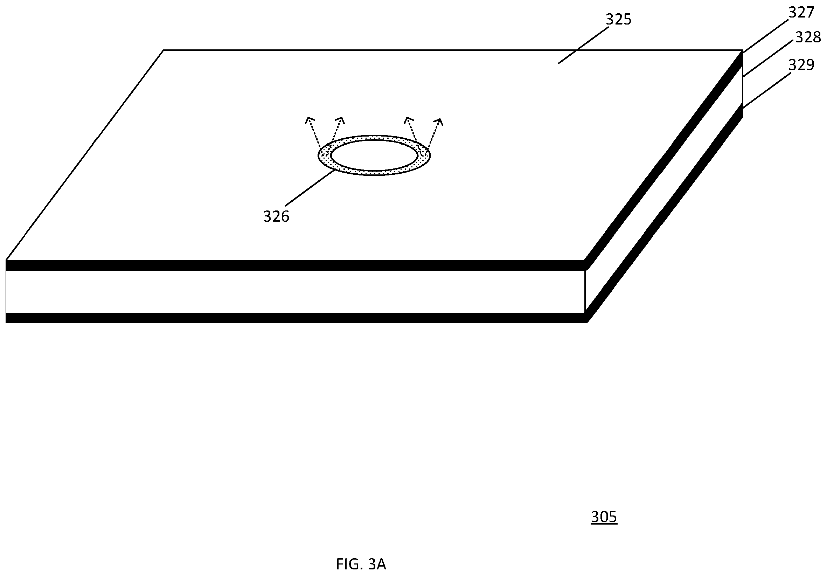

FIG. 3A illustrates a perspective view of a back-lit calibration test plate 305, according to various embodiments. The back-lit calibration test plate 305 may be used in the systems of FIGS. 1 or 2 or any other galvanometric laser having an onboard camera. The calibration fiducial pattern 326 may have a geometry similar to the geometry of calibration fiducial 26 (FIGS. 1 and 2).

The calibration test plate 305 may include more than one layer of different materials. The calibration test plate 305 includes a first section 327 that may include a layer of glass, a second section 328 that may house a light source, and third support section 329 that may include a metal layer with a low coefficient of thermal expansion (such as invar) and/or high dimensional stability (such as steel).

An outside of the first section 327 may be selectively coated with an-optically non-transmissive coating. The selective coating may entirely cover the edges of the section 327 and also selectively cover the surface 325 to form the calibration fiducial pattern 326, so that the calibration fiducial pattern 326 emits light generated from the light source. Also, the selective coating may be highly reflective on the inside of the coating to reflect light from the light source so that the reflected light also may be emitted from the calibration fiducial pattern 326 (and the selective coating may be applied to a top of the third section 329 and/or within the second section 328 for the same reason).

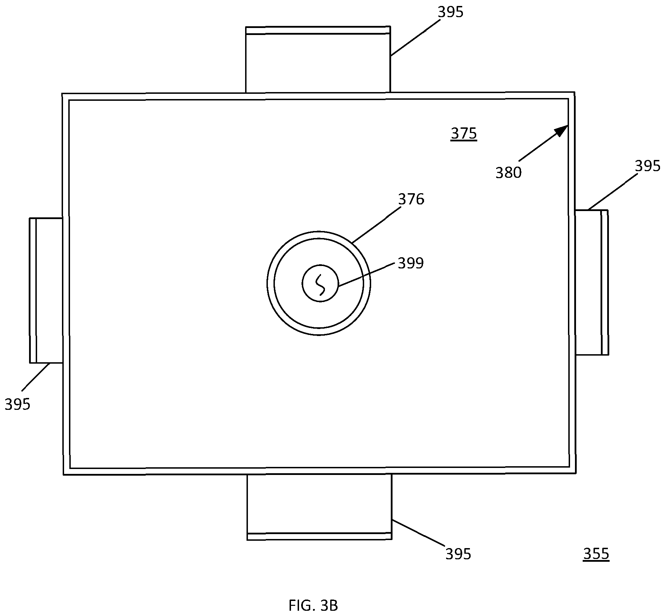

FIG. 3B illustrates a bottom view of a back-lit calibration test plate 355 similar to the back-lit calibration test plate of FIG. 3A (according to various embodiments). In this embodiment, the light housing section also serves as a support section to provide rigidity. The light source 399 may be located under a calibration fiducial pattern 376 (which may be similar to calibration fiducial pattern 326). In this view, an interior surface 380 of the sidewalls of the light housing section can be seen, as can an interior surface 375 of the top section. Any of these surfaces may include a reflective coating.

This embodiment also includes alignment brackets 395 to ensure repeatable location within the machine (e.g., a repeatable location on the support platen). In this embodiment, the alignment brackets 395 extend from each of the sidewalls of the light housing / support section. The alignment brackets 395 mount to edges of the support platen 1 (FIGS. 1 and 2) so calibration fiducial 376 is centered on the support platen 1. In other examples, a different locating feature can be used, for instance bumps or grooves on a bottom of a calibration test piece to mate with bumps or grooves on a support platen, and the locating feature may put the calibration fiducial 376 in some other location on the support platen (it need not necessarily need to be *centered* with the support platen as a whole).

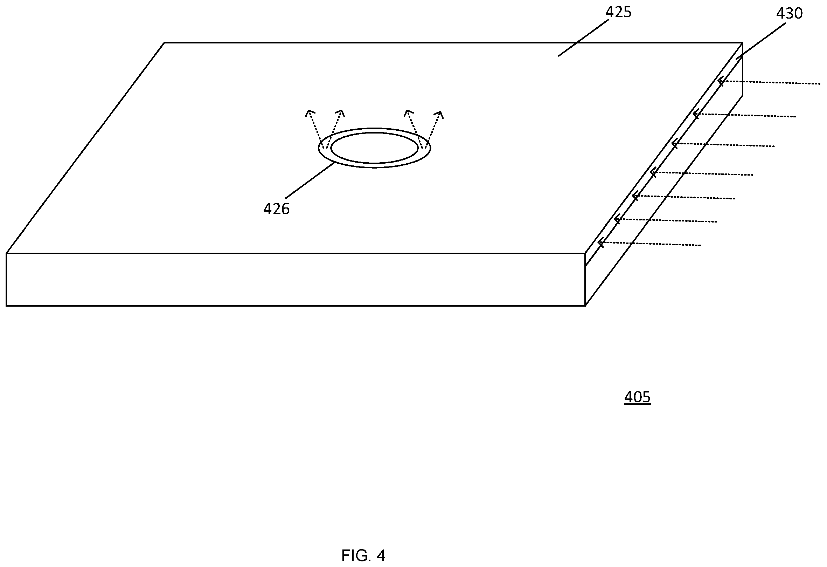

FIG. 4 illustrates a perspective view of an edge-lit calibration test plate 405, according to various embodiments. This calibration test plate 405 may be similar to any of the other calibration test plates described herein, but this embodiment has a glass top layer with at least one exposed edge 430 (the optically non-transmissive coating is not applied to at least this edge). A light source is arranged to emit light into the exposed edge 430. The light travels inside the calibration test plate 405 (reflecting off interior surfaces) until it escapes from the calibration fiducial 426.

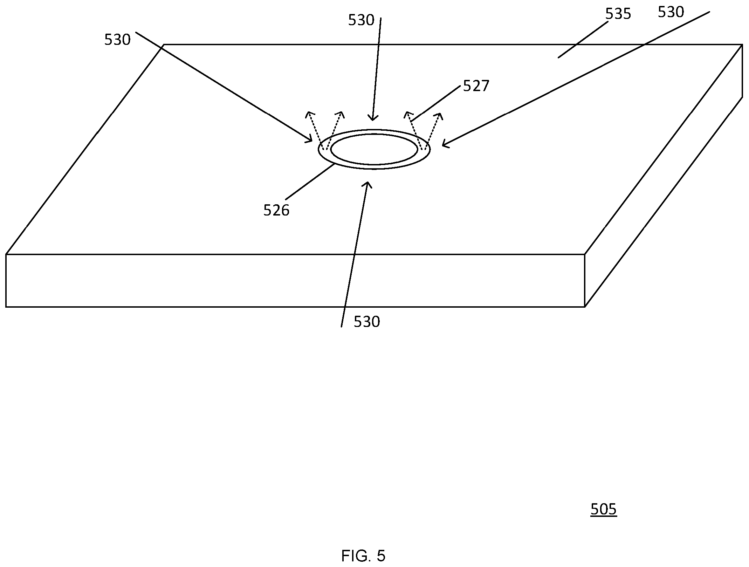

FIG. 5 illustrates a perspective view of a calibration test plate 505 with a reflective surface, according to various embodiments. In this example, the calibration fiducial 526 is reflective with a different reflectivity than the rest of the surface 535. The calibration fiducial 526 may be configured to reflect a portion of ambient light 530 to direct light 527 of a selected wavelength into a laser egress of an X-Y scan head module.

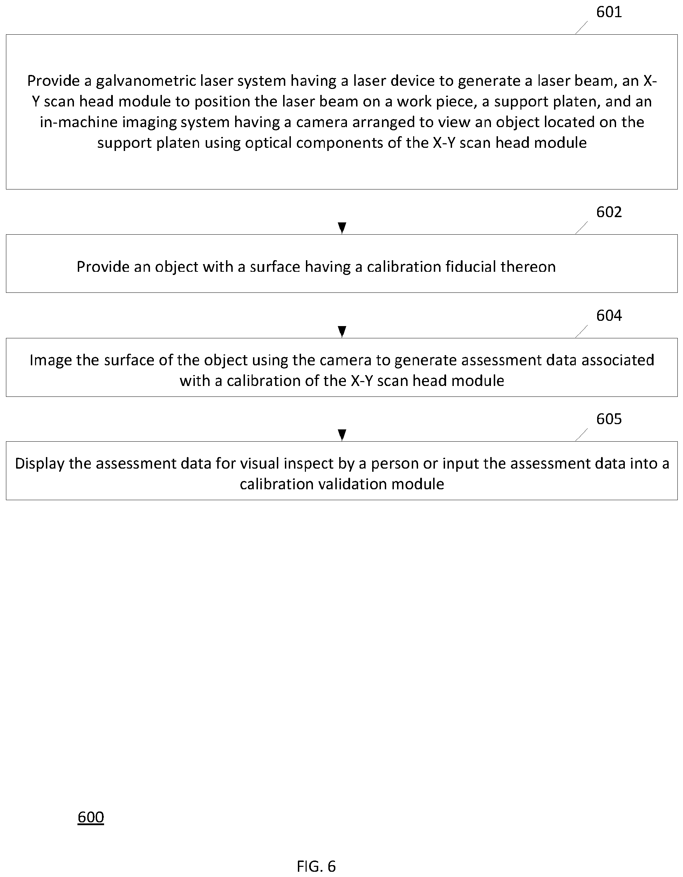

FIG. 6 illustrates a process 600 of generating assessment data using an in-machine imaging system, according to various embodiments. In block 601, a galvanometric laser system (e.g., a two or three axis galvanometric laser system) having a laser device to generate a laser beam, an X-Y scan head module to position the laser beam on a work piece, a support platen, and an in-machine imaging system having a camera arranged to view an object located on the support platen using optical components of the X-Y scan head module may be provided. The galvanometric laser system may have a dynamic focus module, in addition to the X-Y scan head module in some embodiments, and in these embodiments the camera may be arranged to view the object through additional optical components of the dynamic focus module.

In block 602, an object with a surface having a calibration fiducial thereon may be provided. The object may be a calibration test piece or the object may comprise a laser processing target. In the case that the object is a calibration test piece, the object may have any feature of any calibration test plate described in U.S. provisional application serial no. 62/796,011, filed January 23, 2019 (or of any calibration test plate described herein), such as having a first side with a planar surface having the calibration fiducial etched thereon, lithographed thereon, or the like, and a second opposite side to place on the support platen (possibly with a locating feature and/or alignment feature on the second opposite side or some other side of the calibration test piece).

In the case that the object is a laser processing target, the calibration fiducial may be a transient calibration fiducial projected onto the surface of the object by an optical fiducial pattern generator as described in more detail in published U.S. Patent Application 2018/0281067 (U.S. non-provisional application serial no. 15/945,550, filed April 4, 2018). In the case that the object comprises a calibration test piece, the calibration fiducial may be a non-transient calibration fiducial lithographed, etched, or the like, on a planar surface of the calibration test piece.

The transient or non-transient calibration fiducial may be a polygon or an ellipse, similar to any pattern described as laser-marked on a work piece in U.S. provisional application serial no. 62/818,624, filed on March 14, 2019. Although the transient or non-transient calibration fiducial need not be laser-marked on a work piece, the use of the polygon or ellipse may still be effective for the transient or non-transient calibration fiducial, particularly where a computer-aided analysis of the assessment data is performed (a computer may identify the center of a polygon or ellipse more precisely than a center of intersecting lines, as described in the '624 provisional). However, transient or non-transient calibration fiducial may be intersecting lines or any other pattern, in other examples.

In block 604, the surface of the object may be imaged using the camera to generate assessment data associated with a calibration of the X-Y scan head module. In the case that the object is a calibration test piece, imaging may be perform placing a laser processing target on the support platen before placing the laser processing target on the support platen. In the case that the object is the laser processing target, the object may be imaged during laser processing (e.g., in between laser processing operations).

In block 605, the assessment data may be displayed (e.g., on a screen, printed, or the like) for visual inspection by a person (to determine whether the X-Y scan head module is calibrated within a threshold), or the assessment data may be input into a calibration validation module (for a computer-aided determination of whether the X-Y scan head module is calibrated within a threshold).

FIG. 7 illustrates a process 700 of camera-aided evaluation of assessment data generating by imaging a calibration fiducial on a calibration test plate through an X-Y scan head module (of a two or three axis galvanometric laser system), according to various embodiments. The process 700 may be performed on any assessment data described herein, including assessment data generated according to process 600 (FIG. 6). The process 700 may be performed by software of computing device 14 (FIG. 1). In block 701, the computing device may obtain configuration information about a pre-characterized pattern used in a calibration fiducial. In block 702, the computing device may obtain assessment data generated using an integrated imaging system of a galvanometric laser to image a surface in which the calibration fiducial is located thereon.

In block 704, the computing device may recognize a calibration feature in the assessment data. In block 705, the computing device may fit the pre-characterized pattern to the calibration feature to select a point in the image. In an example in which the calibration fiducial is an ellipse or a polygon, block 705 may include identifying a polygon or ellipse based on the calibration feature, e.g., by fitting a parametrically defined polygon or ellipse to the recognized calibration feature.

In block 706, the computing device may determine an offset between the selected point and a reference (e.g., a center of the scan image, or some other reference based on configuration data precharacterizing a location of the calibration test piece on the support platen). In block 707, the computing device may compare the offset to a threshold associated with the desired accuracy for validation. In block 708, the imaging system may validate the galvanometric laser (e.g., the X-Y scan head module) as calibrated if the offset is less than the threshold.

Most of the equipment discussed above comprises hardware and associated software. For example, the typical imaging system and/or galvanometric laser is likely to include one or more processors and software executable on those processors to carry out the operations described. We use the term software herein in its commonly understood sense to refer to programs or routines (subroutines, objects, plug-ins, etc.), as well as data, usable by a machine or processor. As is well known, computer programs generally comprise instructions that are stored in machine-readable or computer-readable storage media. Some embodiments of the present invention may include executable programs or instructions that are stored in machine-readable or computer-readable storage media, such as a digital memory. We do not imply that a "computer" in the conventional sense is required in any particular embodiment. For example, various processors, embedded or otherwise, may be used in equipment such as the components described herein.

Memory for storing software again is well known. In some embodiments, memory associated with a given processor may be stored in the same physical device as the processor ("on-board" memory); for example, RAM or FLASH memory disposed within an integrated circuit microprocessor or the like. In other examples, the memory comprises an independent device, such as an external disk drive, storage array, or portable FLASH key fob. In such cases, the memory becomes "associated" with the digital processor when the two are operatively coupled together, or in communication with each other, for example by an I/O port, network connection, etc. such that the processor can read a file stored on the memory. Associated memory may be "read only" by design (ROM) or by virtue of permission settings, or not. Other examples include but are not limited to WORM, EPROM, EEPROM, FLASH, etc. Those technologies often are implemented in solid state semiconductor devices. Other memories may comprise moving parts, such as a conventional rotating disk drive. All such memories are "machine readable" or "computer-readable" and may be used to store executable instructions for implementing the functions described herein.

A "software product" refers to a memory device in which a series of executable instructions are stored in a machine-readable form so that a suitable machine or processor, with appropriate access to the software product, can execute the instructions to carry out a process implemented by the instructions. Software products are sometimes used to distribute software. Any type of machine-readable memory, including without limitation those summarized above, may be used to make a software product. That said, it is also known that software can be distributed via electronic transmission ("download"), in which case there typically will be a corresponding software product at the transmitting end of the transmission, or the receiving end, or both.

In view of the many possible embodiments to which the principles of the disclosed technology may be applied, it should be recognized that the illustrated embodiments are only preferred examples and should not be taken as limiting the scope of the present invention as defined in the appended claims.

## Claims

1. A galvanometric laser system (100; 150), comprising:
a laser device (7) to generate a laser beam;
an X-Y scan head module (19) to position the laser beam on a work piece, the X-Y scan head module including a laser ingress (29) to receive the laser beam and a laser egress (39) to output the laser beam;
a support platen (1) located below the laser egress (39) and arranged to receive a work piece;
an in-machine imaging system integrated with the galvanometric laser system, wherein a camera (15) of the in-machine imaging system is arranged to use one or more optical components of the X-Y scan head module to view an object located on the support platen (1); and
the galvanometric laser system (100, 150) being **characterised by**:
a light-emissive calibration test piece (25; 305; 355; 405) to place on the support platen (1) during a calibration routine prior to positioning the laser beam on the work piece, the light-emissive calibration test piece comprising an internal light source or the galvanometric laser system is combined with an external light source,
the light-emissive calbration test piece (25; 305; 355; 405) having a planar surface (325) including an optically non-transmissive partial coating to form a calibration fiducial pattern (326), so that the calibration fiducial pattern (326) emits, in use, generated by the internal or external light source,
wherein the calibration fiducial pattern (26; 326; 426) is usable by the camera (15) to generate calibration data associated with a calibration of the X-Y scan head module.

2. The galvanometric laser system (100; 150) of claim 1, further comprising a selective optic (13) located between the laser ingress (29) and the laser device, the selective optic (13) being optically transmissive to the laser beam and optically non-transmissive to light reflected or emitted from the light-emissive calibration test piece (25; 305; 355; 405).

3. The galvanometric laser system (100; 150) of claim 1, wherein the light-emissive calibration test piece (25; 305; 355; 405) is arranged to emit light (27) of a selected wavelength into the laser egress (39).

4. The galvanometric laser system (100; 150) of claim 1, wherein the calibration fiducial (26; 326; 426) comprises a polygon or an ellipse.

5. The galvanometric laser system (100; 150) of claim 4, further comprising one or more processors coupled to the in-machine imaging system, the one or more processors configured to:
recognize a calibration feature in an image (16) of the light-emissive calibration test piece (25; 305; 355; 405), wherein the image (16) is generated by the camera (15);
fit a polygon or an ellipse to the calibration feature; and
determine an offset between a center of the polygon or an ellipse and a reference, wherein the offset is indicative of an accuracy of a calibration of the X-Y scan head module (19).

6. The galvanometric laser system (100; 150) of claim 1, further comprising one or more processors coupled to the in-machine imaging system, the one or more processors configured to:
recognize a calibration feature in an image (16) of the light-emissive calibration test piece (25; 305; 355; 405), wherein the image (16) is generated by the camera (15);
fit a pre-characterized pattern to the calibration feature to select a point in the image (16); and
determine an offset between the selected point and a reference, wherein the offset is indicative of an accuracy of the calibration of the X-Y scan head module (19).

7. The galvanometric laser system (100; 150) of claim 6, wherein the selected point comprises a line intersection of the pre-characterized pattern.

8. The galvanometric laser system (100; 150) of claim 6, wherein the selected point comprises a center of an ellipse or polygon of the pre-characterized pattern.

9. The galvanometric laser system (100; 150) of claim 1, wherein the light-emissive calibration test piece (25; 305; 355; 405) comprises a back-lit calibration test plate or an edge-lit calibration test plate.

10. The galvanometric laser system (100; 150) of claim 1, wherein the calibration fiducial pattern of the light-emissive calibration test piece (25; 305; 355; 405) is an optically transmissive part of the planar surface surrounded by the optical non-transmissive partial coating.

## Patentansprüche

1. Galvanometrisches Lasersystem (100; 150), umfassend:
eine Laservorrichtung (7) zum Erzeugen eines Laserstrahls;
ein X-Y-Scankopfmodul (19) zum Positionieren des Laserstrahls auf einem Werkstück, wobei das X-Y-Scankopfmodul einen Lasereintritt (29) zum Empfangen des Laserstrahls und einen Laseraustritt (39) zum Ausgeben des Laserstrahls einschließt;
eine Stützplatte (1), die sich unterhalb des Laseraustritts (39) befindet und zur Aufnahme eines Werkstücks angeordnet ist;
ein in das galvanometrische Lasersystem integriertes maschineninternes Bildgebungssystem, wobei eine Kamera (15) des maschineninternen Bildgebungssystems so angeordnet ist, dass sie eine oder mehrere optische Komponenten des X-Y-Scankopfmoduls verwendet, um ein auf der Stützplatte (1) befindliches Objekt zu betrachten; und
wobei das galvanometrische Lasersystem (100, 150) durch Folgendes gekennzeichnet ist:
ein lichtemittierendes Kalibriertestteil (25; 305; 355; 405) zum Platzieren auf der Stützplatte (1) während einer Kalibrierroutine vor dem Positionieren des Laserstrahls auf dem Werkstück, wobei das lichtemittierende Kalibriertestteil eine interne Lichtquelle umfasst oder das galvanometrische Lasersystem mit einer externen Lichtquelle kombiniert ist,
wobei das lichtemittierende Kalibriertestteil (25; 305; 355; 405) eine ebene Oberfläche (325) einschließlich einer optisch nicht durchlässigen Teilbeschichtung aufweist, um ein Kalibrierreferenzmuster (326) zu bilden, so dass das Kalibrierreferenzmuster (326) im Betrieb von der internen oder externen Lichtquelle erzeugtes Licht emittiert,
wobei das Kalibrierreferenzmuster (26; 326; 426) von der Kamera (15) verwendet werden kann, um Kalibrierdaten zu erzeugen, die mit einer Kalibrierung des X-Y-Abtastkopfmoduls verbunden sind.

2. Galvanometrisches Lasersystem (100; 150) nach Anspruch 1, weiter umfassend eine selektive Optik (13), die sich zwischen dem Lasereintritt (29) und der Laservorrichtung befindet, wobei die selektive Optik (13) für den Laserstrahl optisch durchlässig ist und für Licht, das von dem lichtemittierenden Kalibriertestteil (25; 305; 355; 405) reflektiert oder emittiert wird, nicht optisch durchlässig ist.

3. Galvanometrisches Lasersystem (100; 150) nach Anspruch 1, wobei das lichtemittierende Kalibriertestteil (25; 305; 355; 405) so angeordnet ist, dass es Licht (27) einer ausgewählten Wellenlänge in den Laseraustritt (39) emittiert.

4. Galvanometrisches Lasersystem (100; 150) nach Anspruch 1, wobei die Kalibrierreferenz (26; 326; 426) ein Polygon oder eine Ellipse umfasst.

5. Galvanometrisches Lasersystem (100; 150) nach Anspruch 4, weiter umfassend einen oder mehrere Prozessoren, die mit dem maschineninternen Bildgebungssystem gekoppelt sind, wobei der eine oder die mehrere Prozessoren so konfiguriert sind, dass sie:
ein Kalibriermerkmal in einem Bild (16) des lichtemittierenden Kalibriertestteils (25; 305; 355; 405) erkennen, wobei das Bild (16) von der Kamera (15) erzeugt wird;
ein Polygon oder eine Ellipse an das Kalibriermerkmal anpassen; und
einen Versatz zwischen einem Mittelpunkt des Polygons oder der Ellipse und einer Referenz bestimmen, wobei der Versatz eine Genauigkeit einer Kalibrierung des X-Y-Scankopfmoduls (19) angibt.

6. Galvanometrisches Lasersystem (100; 150) nach Anspruch 1, weiter umfassend einen oder mehrere Prozessoren, die mit dem maschineninternen Bildgebungssystem gekoppelt sind, wobei der eine oder die mehreren Prozessoren so konfiguriert sind, dass sie:
ein Kalibriermerkmal in einem Bild (16) des lichtemittierenden Kalibriertestteils (25; 305; 355; 405) erkennen, wobei das Bild (16) von der Kamera (15) erzeugt wird;
ein vorab charakterisiertes Muster an das Kalibriermerkmal anpassen, um einen Punkt in dem Bild (16) auszuwählen; und
einen Versatz zwischen dem ausgewählten Punkt und einer Referenz bestimmen, wobei der Versatz die Genauigkeit der Kalibrierung des X-Y-Scankopfmoduls (19) angibt.

7. Galvanometrisches Lasersystem (100; 150) nach Anspruch 6, wobei der ausgewählte Punkt einen Linien-Schnittpunkt des vorab charakterisierten Musters umfasst.

8. Galvanometrisches Lasersystem (100; 150) nach Anspruch 6, wobei der ausgewählte Punkt einen Mittelpunkt einer Ellipse oder eines Polygons des vorab charakterisierten Musters umfasst.

9. Galvanometrisches Lasersystem (100; 150) nach Anspruch 1, wobei das lichtemittierende Kalibriertestteil (25; 305; 355; 405) eine hintergrundbeleuchtete Kalibriertestplatte oder eine randbeleuchtete Kalibriertestplatte umfasst.

10. Galvanometrisches Lasersystem (100; 150) nach Anspruch 1, wobei das Kalibrierreferenzmuster des lichtemittierenden Kalibriertestteils (25; 305; 355; 405) ein optisch durchlässiger Teil der ebenen Oberfläche ist, der von der optisch nicht durchlässigen Teilbeschichtung umgeben ist.

## Revendications

1. Système (100 ; 150) laser galvanométrique, comprenant :
un dispositif laser (7) pour générer un faisceau laser ;
un module (19) de tête de balayage X-Y pour positionner le faisceau laser sur une pièce à usiner, le module de tête de balayage X-Y incluant une entrée laser (29) pour recevoir le faisceau laser et une sortie laser (39) pour produire en sortie le faisceau laser ;
un plateau de support (1) situé sous la sortie laser (39) et agencé pour recevoir une pièce à usiner ;
un système d'imagerie interne à la machine intégré au système laser galvanométrique, dans lequel une caméra (15) du système d'imagerie interne à la machine est agencée pour utiliser un ou plusieurs composants optiques du module de tête de balayage X-Y pour visualiser un objet situé sur le plateau de support (1) ; et
le système (100, 150) laser galvanométrique étant **caractérisé par** :
une éprouvette (25 ; 305 ; 355 ; 405) d'étalonnage à émission de lumière à placer sur le plateau de support (1) lors d'une routine d'étalonnage avant le positionnement du faisceau laser sur la pièce à usiner, l'éprouvette d'étalonnage à émission de lumière comprenant une source lumineuse interne ou le système laser galvanométrique est combiné à une source lumineuse externe,
l'éprouvette (25 ; 305 ; 355 ; 405) d'étalonnage à émission de lumière présentant une surface plane (325) incluant un revêtement partiel optiquement non transmissif pour former un motif repère d'étalonnage (326), de sorte que le motif repère d'étalonnage (326) émette, en utilisation, de la lumière générée par la source lumineuse interne ou externe, dans lequel le motif repère d'étalonnage (26 ; 326 ; 426) peut être utilisé par la caméra (15) pour générer des données d'étalonnage associées à un étalonnage du module de tête de balayage X-Y.

2. Système (100 ; 150) laser galvanométrique selon la revendication 1, comprenant en outre une optique sélective (13) située entre l'entrée laser (29) et le dispositif laser, l'optique sélective (13) étant optiquement transmissive au faisceau laser et optiquement non transmissive à de la lumière réfléchie ou émise par l'éprouvette (25 ; 305 ; 355 ; 405) d'étalonnage à émission de lumière.

3. Système (100 ; 150) laser galvanométrique selon la revendication 1, dans lequel l'éprouvette (25 ; 305 ; 355 ; 405) d'étalonnage à émission de lumière est agencée pour émettre de la lumière (27) d'une longueur d'onde sélectionnée dans la sortie laser (39).

4. Système (100 ; 150) laser galvanométrique selon la revendication 1, dans lequel le repère d'étalonnage (26 ; 326 ; 426) comprend un polygone ou une ellipse.

5. Système (100 ; 150) laser galvanométrique selon la revendication 4, comprenant en outre un ou plusieurs processeurs couplés au système d'imagerie interne à la machine, les un ou plusieurs processeurs étant configurés pour :
reconnaître une caractéristique d'étalonnage dans une image (16) de l'éprouvette (25 ; 305 ; 355 ; 405) d'étalonnage à émission de lumière, dans lequel l'image (16) est générée par la caméra (15) ;
ajuster un polygone ou une ellipse à la caractéristique d'étalonnage ; et
déterminer un décalage entre un centre du polygone ou une ellipse et une référence, dans lequel le décalage est indicatif d'une précision d'un étalonnage du module (19) de tête de balayage X-Y.

6. Système (100 ; 150) laser galvanométrique selon la revendication 1, comprenant en outre un ou plusieurs processeurs couplés au système d'imagerie interne à la machine, les un ou plusieurs processeurs étant configurés pour :
reconnaître une caractéristique d'étalonnage dans une image (16) de l'éprouvette (25 ; 305 ; 355 ; 405) d'étalonnage à émission de lumière, dans lequel l'image (16) est générée par la caméra (15) ;
ajuster un motif précaractérisé à la caractéristique d'étalonnage pour sélectionner un point dans l'image (16) ; et
déterminer un décalage entre le point sélectionné et une référence, dans lequel le décalage est indicatif d'une précision de l'étalonnage du module (19) de tête de balayage X-Y.

7. Système (100 ; 150) laser galvanométrique selon la revendication 6, dans lequel le point sélectionné comprend une intersection de lignes du motif précaractérisé.

8. Système (100 ; 150) laser galvanométrique selon la revendication 6, dans lequel le point sélectionné comprend un centre d'une ellipse ou d'un polygone du motif précaractérisé.

9. Système (100 ; 150) laser galvanométrique selon la revendication 1, dans lequel l'éprouvette (25 ; 305 ; 355 ; 405) d'étalonnage à émission de lumière comprend une plaque d'essai d'étalonnage rétroéclairée ou une plaque d'essai d'étalonnage éclairée par les bords.

10. Système (100 ; 150) laser galvanométrique selon la revendication 1, dans lequel le motif repère d'étalonnage de l'éprouvette (25 ; 305 ; 355 ; 405) d'étalonnage à émission de lumière est une partie optiquement transmissive de la surface plane entourée par le revêtement partiel optique non transmissif.
